# EUROPEAN PATENT SPECIFICATION

(11) **EP 2 626 250 B1**
(45) Date of publication and mention of the grant of the patent: **22.10.2014**
(21) Application number: 13154731.7
(22) Date of filing: 08.02.2013
(51) Int. Cl.: B60R 16/02

(54) **Body wall lining panel for a vehicle passenger compartment**
Innenverkleidung für einen Fahrzeugsabteil
Panneau de revêtement pour un compartiment de voiture passagers

(30) Priority: 10.02.2012 IT TO20120116
(43) Date of publication of application: 14.08.2013
(73) Proprietor: Ansaldobreda S.p.A., Napoli (IT)
(72) Inventor: Giannini, Giuseppe, 81020 San Nicola la Strada (IT); Tarantino, Antonio, 80048 S. Anastasia (IT)
(74) Representative: Boggio, Luigi

(56) References cited:
- DE-A1-102010 023 369
- FR-A1- 2 777 412
- US-A- 5 755 580

## Description

The present invention relates to a lining panel to cover the body wall of a vehicle passenger compartment. In particular, the present invention refers to a train passenger compartment, without thus losing its generic nature.

In a train, the electric traction engines are powered by an electrical system which, for around 30% of its volume, is defined by filter capacitors, necessary for correct operation and to satisfy electromagnetic compatibility requirements. The volume of the capacitors is even higher in systems which use electricity storage batteries defined by large-capacity capacitors, generally called "super-cap".

In general, the capacitors are manufactured in the form of a capacitive film, which is wrapped in rolls, embedded in an insulating resin and housed in a special container, from which the electrical terminals of the capacitive film project. This solution is relatively cumbersome and requires design and creation of large spaces to house said containers, generally beneath the floor of the carriages.
There is a need to arrange the capacitors in a different position and/or a different configuration, so as to be able to use said spaces for other train components.
FR2777412A1 corresponds to the preamble of claim 1 and discloses a plastic section, which forms part of a car and circulates battery current.

The object of the present invention is manufacturing a lining panel for a body wall of a vehicle passenger compartment which solves the above problems simply and inexpensively.
According to the present invention, a body wall lining panel for a vehicle passenger compartment is provided, as defined in claim 1.
The invention will now be described with reference to the appended drawings, which illustrate a non-limiting embodiment, in which:
- figure 1 is a perspective view, and with parts in exploded view, of a preferred embodiment of the lining panel to cover a body wall of a vehicle passenger compartment according to the present invention;
- figure 2 illustrates, in enlarged scale, a detail of the lining panel of figure 1;
- figure 3 is a diagram of an electrical system for electric propulsion of a vehicle where the lining panel of figure 1 is mounted;
- figure 4 shows a different possible arrangement of the lining panel of figure 1; and
- figure 5 shows, with parts removed for clarity, a variant of the lining panel of figure 1.

In figure 1, the number 1 denotes a lining panel arranged in an electrically propelled vehicle 3 (partially illustrated). The vehicle 3 is defined, for example, by a train and, as shown in figure 3, comprises an electrical system 4, which supplies electric current to one or more electric motors 5 designed for traction or propulsion of said vehicle 3. The electrical diagram of the system 4 is the generally known type. In particular, the system 4 comprises a adjusting and pre-charging device 6, an input filter 7, an electricity converter 8, for example an inverter, which powers the engine 5, a braking chopper 9, and an electricity storage device 10.

The input filter 7 and the storage device 10 comprise respective electrical capacitors 11,12, which are in the form of a capacitive film, of the single or multi-layer type, of known type and not described in detail. The capacitive film comprises conductive plates and a dialectric material arranged between said conductive plates, and has an extremely limited thickness. Said capacitive film is used in the form of a sheet 13, of appropriate dimensions, which is embedded in the lining panel 1 (figure 2).

With reference to figure 1, the lining panel 1 has a perimeter edge 14 and two faces 15,16 opposite each other, of which face 15 is facing a passenger compartment 17 of the vehicle 3. Face 16, on the other hand, is facing the metal body 18 of the vehicle 3 so as to cover at least part of a wall 19 of the body 18. Preferably, the lining panel 1 is lying directly on the wall 19. As a function of the external shape of the wall 19 and the shape of the face 16, the lining panel 1 and the wall 19 may define, between each other, a cavity and/or channels 20, for example for passage of electrical cables.

In the preferred embodiment shown in figure 1, the wall 19 defines part of a floor 21 of the body 18, so the lining panel 1 defines part of the flooring 22 of the passenger compartment 17. In particular, the lining panel 1 defines a tile, which is placed close to other similar tiles (of which one is partially illustrated) which complete the flooring 22.

Advantageously, a releasable type attachment device 23 holds the lining panel 1 stably against the wall 19. For example, device 23 comprises a plurality of screws or bolts, which are arranged along the longitudinal sides of the perimeter edge 14 and fasten the lining panel 1 to the wall 19.

Preferably, the face 15 defines the passenger compartment 17 directly, without further upper linings, so it is a horizontal floor surface.

As shown in detail in figure 2, the lining panel 1 comprises a multi-layer structure 24, in which the sheet 13 is embedded and electrically insulated. In the particular example shown, the structure 24 comprises: an upper layer 25 which defines the face 15 and must therefore be relatively high-resistance, anti-slip, anti-wear and tear, etc...; an internal layer 26 supporting layer 25; an internal layer 27 with elastic and/or damping characteristics; and a base layer 28, defining the face 16. In particular, the sheet 13 is "sandwiched" between layers 27 and 28, which are manufactured in electrically insulating materials. Also, at least one of the layers of the structure 24 is a thermal insulator.

As shown in figure 1, when the lining panels 1 are arranged on the floor 21, the sheets 13 are electrically connected to plugs or connectors 29 (schematically shown), which define the connection to the rest of the system 4 and are accessible in the passenger compartment 17 during installation of the flooring 22. In particular, the connectors 29 are arranged on the floor 21, may be housed in the cavities 20, if these are envisaged, and may have a fixed position or be moveable. Connection of the sheets 13 to the connectors 29 may be of various types, for example:
- by means of cables 30, which are connected to the conductive plates of the sheet 13 and project outside the structure 24;
- by means of connectors or contact plates (not shown), which are connected to the conductive plates of the sheet 13, are arranged along face 16 in a fixed position and, for example, are partially embedded in the layer 28.

According to the variant shown in a simplified manner in figure 5, the multi-layer structure of the lining panel 1 is a mat 31, which has a multi-layer structure in which the sheet 13 is embedded. Mat 31 is rolled in coils (not shown) when it is stored prior to installation. In order to form the flooring 22, the mat 31 is unrolled and placed directly on the floor 21 while it is connected to the connectors 29. The mat 31 is then covered with relatively rigid tiles 32, which define the floor surface of the flooring 22.

According to the variant shown in a simplified manner in figure 4, the lining panel 1 covers a side wall 33 of the body 18, so as to define part of a covering or upholstery 34 of the side wall 33. In this variant as well, the lining panel 1 is preferably in the form of a tile, which is placed close to other identical tiles (not shown) which complete the covering 34.

It is clear from the above that the lining panel 1 performs not only an aesthetic function, since it covers the body 18, and/or a mechanical and a comfort function, defining the flooring 22, but also a function of housing and support of the capacitors 11,12.

This latter function is particularly useful in high-voltage, electrical traction vehicles (for example, in applications on rails with voltage of 750 V), where extension of the capacitors 11,12 is relatively high. In fact, the above described solutions allow use of parts already present in the majority of vehicles, namely the panels covering the metal walls of the body 18, and also give them another use, by embedding the capacitors 11,12, so as to avoid dedicated spaces for the capacitors and therefore improve known solutions in terms of overall dimensions.

Due to the fact that the spaces occupied by the capacitors in the known solutions are freed, the converter 8 could be flat in shape, be mounted under the floor 21 and arranged substantially in contact with it, so as to use the floor 21 as a heat exchanger for cooling the converter 8. This improvement would allow the normal system to be eliminated or reduced, with a radiator and possibly a fan to cool the converters.

The technology and procedures for embedding the sheet 13 as a layer of the structure 24 are relatively simple. Capacitive films with high electrical capacity are also now available on the market.

Furthermore, the manufacturing costs are relatively low, since there is no need to alter the external characteristics of the lining panels currently used and the structural characteristics of the body 18. At the same time, maintenance and cleaning of the passenger compartment 17 is performed normally, as in the presence of normal flooring.

Trains also have a large amount of flooring and side walls, so arrangement of the sheets 13 is simple and it is possible to achieve high values of electrical capacity easily.

Furthermore, sheet 13 contributes to increasing the mechanical characteristics of the lining panel 1.

Due to the proximity of the metal floor 21 and the sheets 13 embedded in the lining panels 1, the floor 21 may possibly be used as a point of electrical earthing.

In conclusion, it is clear from the above that changes and variants may be made to the lining panel 1 described without deviating from the area of protection of the present invention, as defined in the appended claims.

In particular, the number and the function of the various layers of structure 24 could be different to those indicated by way of example.

Besides trains, the lining panel 1 could also be applied on another type of vehicle on rails (trams, metropolitan railways, etc...) and on electrically propelled vehicles in general (for example: automobiles, trucks, both civil and military, light aircraft and boats with propellers and/or blades controlled by electric motors, etc.); and/or the lining panel 1 could have a plurality of sheets 13 embedded inside the structure 24.

## Claims

1. A lining panel for covering a body wall in a passenger compartment (17) of a vehicle (3); the lining panel (1) comprising
- a multi-layer structure (24) defined by a first face (16) facing, in use, said body wall (19) and by a second face (15) facing, in use, said passenger compartment (17);
- electric connector means (30) arranged at least partially outside said multilayer structure (24) so as to be connected to corresponding connectors of said vehicle (3);
**characterised by** comprising electric capacitor means shaped as a sheet (13) embedded in said multi-layer structure (24); said electric connector means (30) being electrically connected to conductive plates of said sheet (13).

2. The lining panel according to claim 1, **characterised in that** said sheet (13) defines a layer of said multi-layer structure (24) and is arranged in contact with adjacent layers which are electrical insulators.

3. The lining panel according to claim 1 or 2, **characterised by** defining a tile.

4. The lining panel according to claim 1 or 2, **characterised by** being a mat, which is rolled in coils when it is stored prior to installation.

5. The lining panel according to any of the preceding clams, **characterised by** defining a part of a floor (22) for said passenger compartment (17).

6. The lining panel according to any of claims 1 to 4, **characterised by** defining part of a lining (34) of a side wall of said body (18).

7. An electrically driven vehicle (3) comprising:
- a body (18) defining a passenger compartment (17);
- at least one lining panel (1) arranged in said passenger compartment (17) to cover a wall of said body (18) and made according to any of the preceding claims.

8. The vehicle according to claim 7, **characterised by** comprising a current converter (8) mounted below a vehicle floor (21) of the body (18) and arranged substantially in contact with said floor (21).

## Patentansprüche

1. Verkleidungsplatte zum Abdecken eines Wandkörpers in einer Fahrgastzelle (17) eines Fahrzeugs (3) umfassend:
- eine Mehrschichtstruktur (24), welche von einer ersten Fläche (16), welche im Gebrauch dem Wandkörper (19) gegenüberliegt, und einer zweite Fläche (15) definiert ist, welche im Gebrauch der Fahrgastzelle (17) gegenüberliegt;
- elektrische Verbindungsmittel (30), welche zumindest teilweise außerhalb der Mehrschichtstruktur (24) angeordnet sind, um mit korrespondierenden Verbindern des Fahrzeugs (3) verbunden zu sein;
**gekennzeichnet durch** eine elektrische Kondensatoreinrichtung, welche als Platte (13) ausgebildet ist und in die Mehrschichtstruktur (24) eingebettet ist ; wobei die Verbindungsmittel (30) elektrisch mit Leiterplatten der Platte (13) verbunden sind.

2. Verkleidungsplatte nach Anspruch 1, **dadurch gekennzeichnet, dass** die Platte (13) eine Schicht der Mehrschichtstruktur (24) definiert und in Kontakt mit benachbarten Schichten steht, die als elektrische Isolatoren ausgebildet sind.

3. Verkleidungsplatte nach Anspruch 1 oder 2, **gekennzeichnet durch** das Definieren einer Fliese.

4. Verkleidungsplatte nach Anspruch 1 oder 2, **gekennzeichnet durch** das Definieren einer Matte, welche vor ihrer Anbringung aufgewickelt gelagert wird.

5. Verkleidungsplatte nach einem der vorhergehenden Ansprüche, **gekennzeichnet durch** das Definieren eines Teils eines Bodens (22) für den Fahrgastraum (17).

6. Verkleidungsplatte nach einem der der Ansprüche 1 bis 4, **gekennzeichnet durch** das Definieren eines Teils einer Verkleidung (34) einer Seitenwand des Körpers (18).

7. Ein elektrisch angetriebenes Fahrzeug (3), umfassend:
- einen Körper (18), welcher einen Fahrgastraum (17) definiert;
- zumindest eine Verkleidungsplatte (1), welche in dem Fahrgastraum (17) angeordnet ist, um eine Wand des Körpers (18) abzudecken und nach einem der vorhergehenden Ansprüche hergestellt ist.

8. Fahrzeug nach Anspruch 7, **gekennzeichnet durch** einen Stromrichter (8), welcher unter einem Fahrzeugboden (21) des Körpers (18) befestigt ist und im Wesentlichen in Kontakt mit dem Boden (21) steht.

## Revendications

1. Panneau de revêtement pour recouvrir une paroi de caisse dans un compartiment de passagers (17) d'un véhicule (3) ; le panneau de revêtement (1) comprenant :
- une structure multicouche (24) définie par une première face (16) faisant face, lors de l'utilisation, à ladite paroi de caisse (19) et par une deuxième face (15) faisant face, lors de l'utilisation, audit compartiment de passagers (17) ;
- des moyens formant connecteurs électriques (30) disposés au moins partiellement à l'extérieur de ladite structure multicouche (24) de façon à être connectés à des connecteurs correspondants dudit véhicule (3) ;
**caractérisé en ce qu'**il comprend des moyens formant condensateurs électriques formés sous la forme d'une feuille (13) incorporée dans ladite structure multicouche (24) ; lesdits moyens formant connecteurs électriques (30) étant électriquement connectés à des plaques conductrices de ladite feuille (13).

2. Panneau de revêtement selon la revendication 1, **caractérisé en ce que** ladite feuille (13) définit une couche de ladite structure multicouche (24) et est disposée en contact avec des couches adjacentes, qui sont des isolateurs électriques.

3. Panneau de revêtement selon la revendication 1 ou 2, **caractérisé en ce qu'**il définit une tuile.

4. Panneau de revêtement selon la revendication 1 ou 2, **caractérisé en ce qu'**il s'agit d'un matelas, qui est enroulé sous la forme de rouleaux lorsqu'il est stocké avant l'installation.

5. Panneau de revêtement selon l'une quelconque des revendications précédentes, **caractérisé en ce qu'**il définit une partie d'un plancher (22) pour ledit compartiment de passagers (17).

6. Panneau de revêtement selon l'une quelconque des revendications 1 à 4, **caractérisé en ce qu'**il définit une partie d'un revêtement (34) d'une paroi latérale de ladite caisse (18).

7. Véhicule à entraînement électrique (3), comprenant :
- une caisse (18) définissant un compartiment de passagers (17) ;
- au moins un panneau de revêtement (1) disposé dans ledit compartiment de passagers (17) de façon à recouvrir une paroi de ladite caisse (18), et réalisé selon l'une quelconque des revendications précédentes.

8. Véhicule selon la revendication 7, **caractérisé en ce qu'**îl comprend un convertisseur de courant (8) monté en dessous d'un plancher de véhicule (21) de la caisse (18), et disposé sensiblement en contact avec ledit plancher (21).
